# EUROPEAN PATENT APPLICATION

(11) **EP 4 471 657 A1**
(43) Date of publication of application: **04.12.2024**
(21) Application number: 24179137.5
(22) Date of filing: 30.05.2024
(51) Int. Cl.: G06F 30/3947, G06F 30/3953, G06F 30/392, G06F 115/02, G06F 115/08

(54) **DESIGN TOOL AND METHOD FOR WIRE ROUTING DURING THE GENERATION OF A NETWORK-ON-CHIP**

(30) Priority: 30.05.2023 US 202363469543 P; 29.05.2024 US 202418676770
(71) Applicant: Arteris, Inc, Campbell, CA 95008 (US)
(72) Inventor: CHARIF, Amir, Paris (FR)
(74) Representative: Barker Brettell LLP

(57) **Abstract**

Method for guiding physical generation of a network-on-chip (NoC) using a design tool, the method comprising: receiving a floorplan for the NoC, the floorplan including blockage areas and constraints; synthesizing the NoC to determine routing regions using the constraints and including at least one node; identifying a first source in a first routing region and a first destination in a second routing region, wherein the first source and the first destination communicate; determining a macro route from the first source to the first destination by computing a minimal route between the first and second routing regions, the macro route including at least the first routing region and the second routing region; and establishing a micro route from the first source to the first destination using a minimal path routing algorithm to connect the first source to the first destination.

## Description

### TECHNICAL FIELD

The present technology is in the field of electronic system design and, more specifically, related to physical implementation guidance for very fast rectilinear routing of wires in a floorplan related to a network-on-chip (NoC).

### BACKGROUND

Multiprocessor systems have been implemented in systems-on-chips (SoCs) that communicate through network-on-chips (NoCs). The SoCs include instances of initiator intellectual properties (IPs) and target IPs. Transactions, in the form of packets, are sent from an initiator to one or more targets using industry-standard protocols. The initiator, connected to the NoC, sends a request transaction to a target, using an address to select the target. The NoC decodes the address and transports the request from the initiator to the target. The target handles the transaction and sends a response transaction, which is transported back by the NoC to the initiator.

For a given set of performance requirements, such as connectivity and latency between source and destination, frequency of the various elements, maximum area available for the NoC logic and its associated routing (wiring), minimum throughput between sources and destinations, power consumption requirements for the NoC, and position on the floorplan of elements attached to the NoC, it is a complex task to create an optimal NoC that fulfills all the requirements with a minimum amount of logic and wires. This is typically the job of the chip architect or chip designer to create this optimal NoC, and this is a difficult and time-consuming task.

In addition to this being a difficult task, the design of the NoC is revised every time one of the requirements changes, such as modifications of the chip floorplan, addition or deletion of IP components, or modification of the expected performance. As a result, this task needs to be redone frequently over the design time of the chip using any design tool. Consider a design tool that is used to edit a NoC topology on top of a floorplan in a graphical view. Wires connecting two NoC elements need to be routed in a rectilinear fashion while avoiding the blocked regions, aka "blockages." The tool should display the precise route between two elements that are networked and refresh the precise route interactively as soon as the user/designer moves one of the elements, thereby allowing for automatic generation of the NoC layout. Automatic NoC generation (i.e. topology synthesis) also needs to perform several distance computations to generate optimal trees. Typically, the floorplan is discretized into small square cells of a given size (i.e. resolution). Many efficient routing algorithms exist, such as A* algorithm or Dijkstra algorithm, that could be used to compute a route between two cells (nodes) in the floorplan. In accordance with some aspects and embodiments of the invention, the tool uses the algorithm to visit all of the cells of a discretized floorplan. The higher the resolution, the slower the algorithm. Therefore, what is needed is a design tool capable of implementing a fast routing method that is more suitable for interactive recomputations of routes and distances in the floorplan and leverages the fact that routes are always rectilinear thereby needing to visit a fraction of the total floorplan cells or regions.

### SUMMARY

In accordance with various embodiments and aspects of the invention, a tool is disclosed for implementing fast routing methods that are more suitable for interactive recomputations of routes and distances in the floorplan. The tool leverages the routes that are rectilinear thereby needing to visit a fraction of the total floorplan cells or regions.

### BRIEF DESCRIPTION OF THE DRAWINGS

FIG. 1 shows a graphical representation of a floorplan for a Network-on-Chip (NoC);
FIG. 2 shows the floorplan of FIG. 1 with blocked regions or blockages in accordance with various aspects and embodiments of the invention;
FIG. 3 shows the floorplan of FIG. 1 with one or more units attached to a node in the floorplan in accordance with various aspects and embodiments of the invention;
FIG. 4 shows a floorplan, such as FIG. 1, with routing regions defined by various constraints in accordance with the various aspects and embodiments of the invention;
FIG. 5 shows a floorplan scenario with regions and routing in accordance with the various aspects and embodiments of the invention; and
FIG. 6 shows a process used by a design tool to implement fast routing in accordance with the various aspects and embodiments of the invention.

### DETAILED DESCRIPTION

The following describes various examples of the present technology that illustrate various aspects and embodiments of the invention. Generally, examples can be used to describe aspects in any combination. All statements herein reciting principles, aspects, and embodiments as well as specific examples thereof, are intended to encompass both structural and functional equivalents thereof. Additionally, it is intended that such equivalents include both currently known equivalents and equivalents developed in the future, i.e., any elements developed that perform the same function, regardless of structure.

It is noted that, as used herein, the singular forms "a," "an" and "the" include plural referents unless the context clearly dictates otherwise. Reference throughout this specification to "one aspect," "an aspect," "certain aspects," "various aspects," or similar language means that a particular aspect, feature, structure, or characteristic described in connection with any embodiment is included in at least one embodiment of the invention.

Appearances of the phrases "in one embodiment," "in at least one embodiment," "in an embodiment," "in certain embodiments," and similar language throughout this specification may, but do not necessarily, all refer to the same embodiment or similar embodiments. Furthermore, aspects and embodiments of the invention described herein are merely exemplary, and should not be construed as limiting the scope or spirit of the invention as appreciated by those of ordinary skill in the art. The disclosed invention is effectively made or used in any embodiment that includes any novel aspect described herein. All statements herein reciting principles, aspects, and embodiments of the invention are intended to encompass both structural and functional equivalents thereof. It is intended that such equivalents include both currently known equivalents and equivalents developed in the future.

As used herein, a transaction may be a request transaction or a response transaction. Examples of request transactions include write requests and read requests.

As used herein, a node is defined as a distribution point or a communication endpoint that is capable of creating, receiving, and/or transmitting information over a communication path or channel. A node may refer to any one of the following: switches, splitters, mergers, buffers, and adapters. As used herein, splitters and mergers are switches; not all switches are splitters or mergers. As used herein and in accordance with the various aspects and embodiments of the invention, the term "splitter" describes a switch that has a single ingress port and multiple egress ports. As used herein and in accordance with the various aspects and embodiments of the invention, the term "merger" describes a switch that has a single egress port and multiple ingress ports.

In accordance with the various aspects of the invention, a system-on-chip (SoC) includes multiple clock domains and multiple power domains. A clock domain is defined by all the logic fed by a given clock input. The clock input is characterized by the frequency of the clock, which is its most important parameter. A power domain is defined by all the logic getting power supply from the same power source. In accordance with the various aspects of the invention, the power source is gated, thus, the power domain can be on or off or isolated from other power domains. As such, the designer provides the set of clock domain and power domain constraints as part of the initial design.

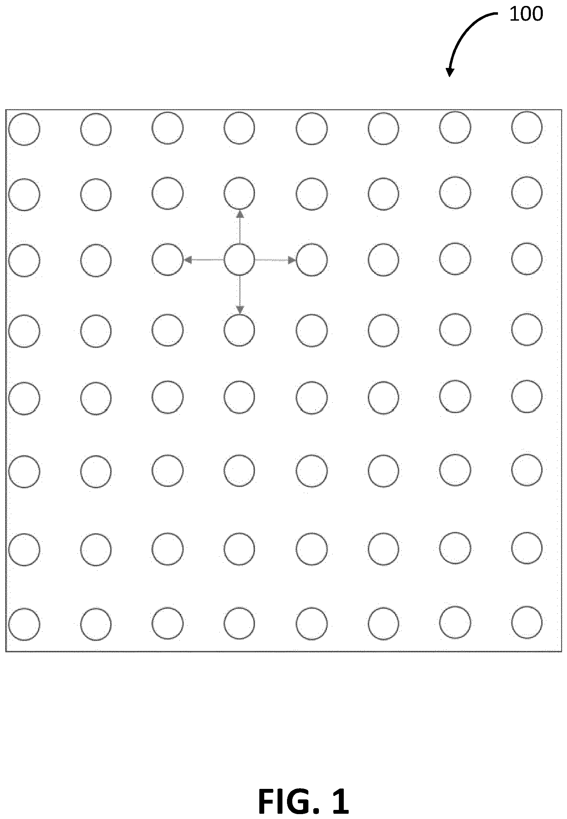

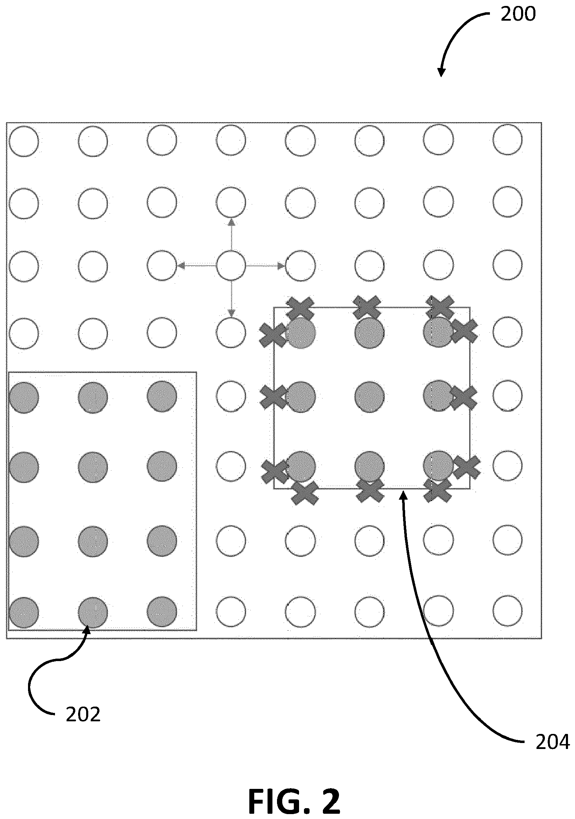

Referring now to FIG. 1 and FIG. 2 a floor plan 100 and a floorplan 200, respectively, are shown in accordance with some aspects and embodiments of the invention. The floorplan 200 includes blockage area 202 and blockage are 204. The floorplan is modeled as a mesh network of Floorplan Nodes. The number of nodes per row/column can be set by the user/designer as a resolution. Each floorplan node is connected to its four (at most) neighboring (north, south, east, west) nodes. Blockages of the floorplan are modelled by disconnecting nodes that fall under the blockage from their neighbors, for example as shown in FIG. 2. In accordance with some aspects and embodiments of the invention, floorplan regions that represent the bounds of a clock or a power domain, are modelled by identifying the nodes, for example by coloring the nodes that fall under the region. Each node may have multiple colors to represent various constraints or parameters associated with the over system (e.g. it falls under a certain clock domain and a certain clock tree can reach it).

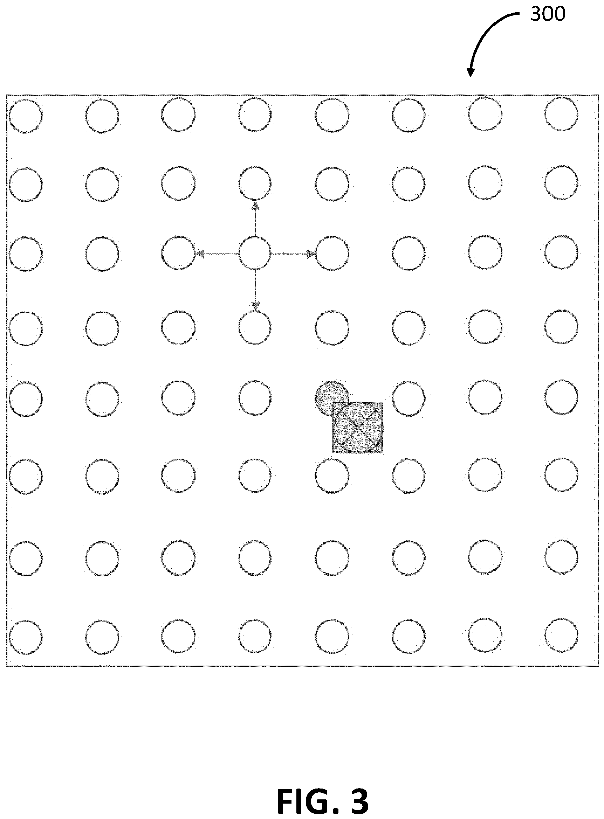

Referring to FIG. 3, a floorplan 300 is shown with one or more units attached to a given floorplan node in accordance with some aspects and embodiments of the invention. In accordance with some aspects and embodiments of the invention, the number of units that can be attached to a node can be dictated by technological parameters (e.g. cell density) and the area of elements. In accordance with some aspects and embodiments of the invention, the floorplan 300 mesh is an irregular mesh. It is not always possible to use a minimal routing algorithm (e.g. X then Y) to find a route between two points, as detours may be required because of disconnected nodes. In accordance with various aspects of the invention, the tool leverages the routing in a mesh network, by splitting the irregular mesh into multiple, interconnected regular meshes.

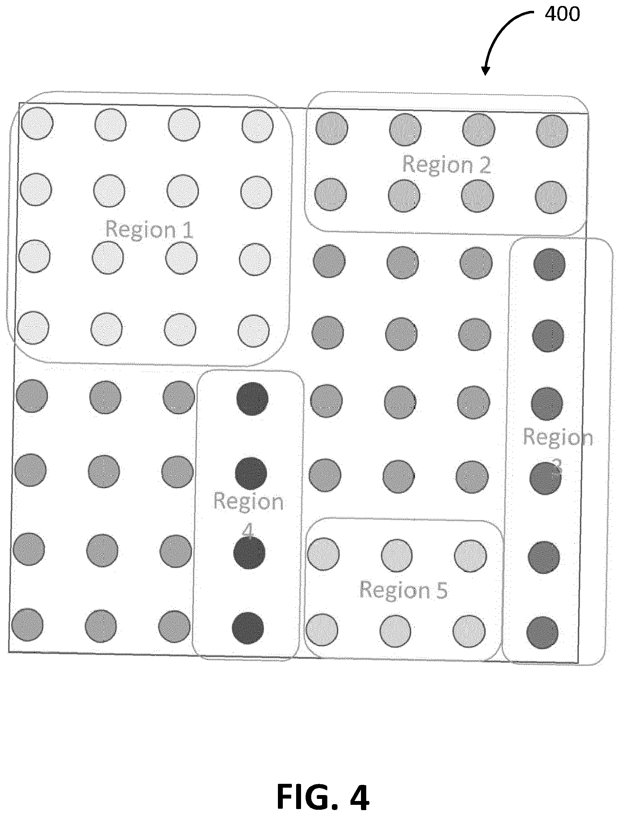

Referring now to FIG. 4, a floorplan 400 is shown with 3 (Region 1, Region 2, Region 3, Region 4, Region 5) in accordance with some aspects and embodiments of the invention. A routing region is a subset of the floorplan mesh, which includes at least one node and constituting a regular mesh; that is, every node inside the routing region can reach every other node through a minimal path (equivalent to the Manhattan distance) with no detours. In accordance with various aspects of the invention, inside a routing region, computing the distance between two nodes is done in constant time because it is equal to the Manhattan distance (dX + dY). In accordance with various aspects of the invention, inside a routing region, computing a valid path between two points is done in N steps, N being the Manhattan distance between the two points in terms of number of nodes. In other words, for a routing region that has X columns and Y rows, in the worst case, obtaining a full path between two points would take X + Y steps, compared to the X*Y steps in the worst case when a full routing algorithm is used (e.g. Dijkstra).

Each routing region stores a range (horizontal or vertical) of floorplan nodes that connect it to a neighboring region. A routing region may have multiple neighbors, reachable through different ranges of nodes. In accordance with various aspects of the invention, tor a given floorplan configuration, the routing regions are computed and stored in memory. In accordance with various aspects of the invention, the tool has information for each floorplan node. The tool also knows the routing region that each floorplan node belongs to or is located. In accordance with various aspects of the invention, this differentiation is represented by color differences and one of its colors. Thus, each region, when represented or displayed in a graphical user, is assigned a unique color.

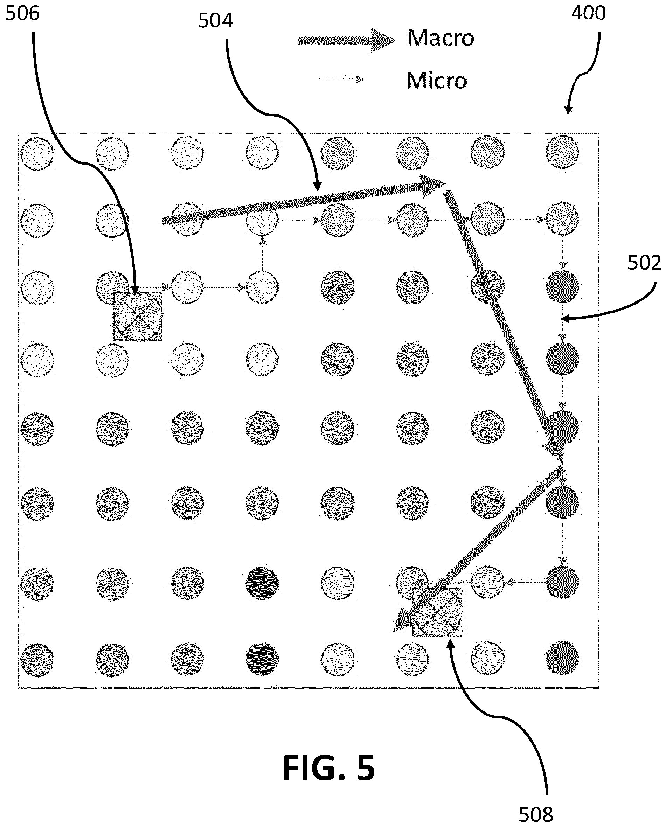

Referring now to FIG. 5, the floorplan 400 is shown with the routing regions and global micro routing 502 and macro routing 504. In accordance with various aspects of the invention, the tool includes leveraging the efficiency of routing (and distance computation) within a single routing region, to build a global routing algorithm in two steps, using macro routing 504 and micro routing 502. In accordance with some aspects and embodiments of the invention, macro routing 504 occurs, when given the routing region of the source node 506 and destination nodes 508, by computing a minimal route between the two regions that include the source node 506 and the destination node 508 . In accordance with some aspects and embodiments of the invention, a Dijkstra algorithm or A* algorithm can be used to find the shortest path between the two regions and the shortest path will operate at the scale of routing regions, not at level of the nodes. From a starting (source) node, the accumulated distance in the shortest path algorithm is computed efficiently, which can be done in constant time between two regions. The result of this step is the path 504 including routing regions. The path 504 begins in Region 1, then to Region 2, then to Region 3 and ends at Region 5 where the ending (destination) node is located.

In accordance with some aspects and embodiments of the invention, micro routing is represented by the micro route 502. The tool generates the micro route 502 using an efficient minimal path routing algorithm (such as routing along X and routing along Y) to connect each routing region covered by the macro path 504 that was previously computed by the macro routing step, until the destination node 508 is reached.

In accordance with various aspects of the invention, the tool works with any given splitting of a floorplan mesh into routing regions. In accordance with various aspects of the invention, the splitting algorithm generates routing regions that are as large as possible. The tool includes a machine learning model that allows for feedback on the selection of the routing regions. For example, the designer can identify routing regions that need to be updated and provide that information as feedback to further training the machine learning model. In accordance with various aspects of the invention, the machine learning model is updated by the tool as various routing regions are identified and later modified by the tool. Further, the machine learning model can identify routing regions and later revise the routing regions based on macro routing or micro routing determinations. In accordance with various aspects of the invention, if each routing region contains exactly one node, then the complexity is identical to a classical shortest path algorithm and the machine learning model can be trained to immediately identify and use the algorithm best suited for determining the routing.

In accordance with various aspects of the invention, instead of using a static minimal path routing algorithm (routing along X and routing along Y) within a given routing region, the tool uses a dynamic routing algorithm that is biased by any given metric. The machine learning model (as applied by the Artificial Intelligence (Al) aspect to the tool) use past modeling training and feedback to calculate routing regions that are biased using any given metric, examples of which follow. In accordance with various aspects of the invention, if each node tracks the number of wires, it has previously routed, the routing algorithm may select the neighbor that has the least wires, so as to reduce wire congestion. In accordance with various aspects of the invention, if the routing algorithm is used to build a spanning tree, information about multiple destinations can be provided so as to make the routing algorithm approach as many destinations as possible at once, instead of approaching one destination.

In accordance with some aspects and embodiments of the invention, the results of the macro routing step can be stored or cached to avoid repeating the determination of macro path 504 for the macro routing many times in a row. If the path from one routing region to another is known then it can be reused to make the routing determination even faster. In accordance with some aspects and embodiments of the invention, if the cached routing path was computed based on a source/destination that is far from the new source/destination, the computed route may not be used because it may not be optimal.

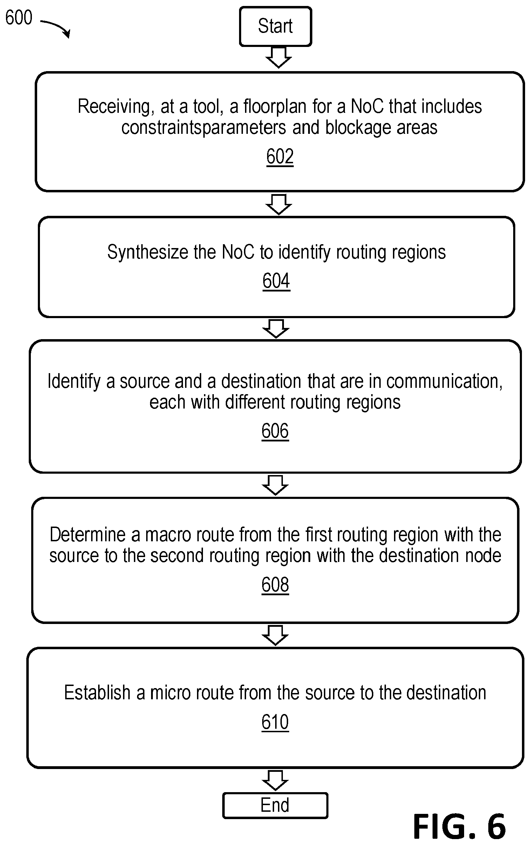

Referring now to FIG. 6, the design tool executes a process 600. The design tool receives a floorplan for a NoC along with any constraint/parameter, including blockage areas at step 602. At step 604, the NoC is analyzed or synthesized to identify routing regions. As noted, routing regions are defined and identified based on similarity of parameters and/or constraints etc. In accordance with some aspects and embodiments of the invention, the routing region is partitioned into a set of 2×2 high level cell arrays. Each array is separated so that the routes are restrained within each array individually, and no wires cross the solid border. The routing is performed in each 2×2 array to minimize the congestion. At the next smaller array, the design tool forms a new set of 2×2 arrays within any of the high-level cell arrays. This process is repeated until the routing arrays are determined. At step 606, the tool identifies the source 506 and the destination 508, each of which are located in a different routing region. At step 608, the tool analyzes the floorplan to determines the macro routing 504. Once the macro routing is determined, then at step 610, the tool them perform calculations to determine the micro routing 502 that follows the macro routing 504 from the source 506 to the destination 508. As noted, the tool includes a machine learning model that can detect and perform the macro routing and the micro routing analysis. In accordance with some aspects and embodiments of the invention, the tool receives input from the designer regarding changes or updates that need to be made to improve or change the NoC. These inputs are provided to the machine learning model as feedback to further train the machine learning model. In accordance with some aspects and embodiments of the invention, feedback may also be provided using an adversarial machine learning model.

In accordance with the various aspects of the invention, initiators and targets are communicatively connected to the NoC. An initiator is a unit that sends requests and may be a source for routing determinations. An initiator typically is configured to read and write commands. A target is a unit that serves or responds to the requests and may be a destination. A target typically is configured to read and write commands. Each initiator is attached to or connected to the NoC through a NIU. The NIU that is attached to an initiator is called an Initiator Network Interface Unit (INIU). Further, each target is attached to the NoC through an NIU. The NIU that is attached to a target is called a Target Network Interface Unit (TNIU). The primary functionality of the NoC is to carry each request from an initiator to the desired destination target, and if the request demands or needs a response, then the NoC carries each target's response to the corresponding requesting initiator. Initiators and targets have many different parameters that characterize them. In accordance with the various aspects of the invention, for each initiator and target, the clock domain and power domain they belong to are defined. The width of the data bus they use to send, write, and receive read payloads is a number of bits. In accordance with the various aspects of the invention, the width of the data bus for the connection (the communication path to/from a target) used to send, write requests, and receive write responses are also defined. Furthermore, the clock and power domain definition are a reference to the previously described clock and power domains existing in the SoC, as described herein.

In accordance with the various aspects of the invention, initiators are not required to be able to send requests to all targets or targets that are connected to the NoC. The precise definition of the target that can receive requests from an initiator is outlined or set forth in a connectivity table. The connectivity and traffic class labeling information can be represented as an explicit or conceptual matrix. Each initiator has a row and each target has a column. If an initiator must be able to send traffic to a target, a traffic class label must be present at the intersection between the initiator row and the target column. If no label is present at an intersection, then the tool does not need connectivity between that initiator and that target. In accordance with the various aspects of the invention, the actual format used to represent connectivity can be different, as long as each pair of initiator-target combination has a precise definition of its traffic class, or no classification label if there is no connection. It is within the scope of this invention for an initiator/target connection to support a plurality of traffic classes.

It is within the scope of this invention for latency to refer to the number of clock cycles it takes for data to make its way through the network. Latency causes problems in transport networks despite having a high-bandwidth (frequency). An example of a "real-time traffic class" would be video data from a camera in a self-driving car. It isn't acceptable to have long latency in the propagation of the data. If some data were lost it would make the vehicle unsafe. A still real-time but less vital traffic class would be for audio and/or video in the entertainment system. It would not be desirable to have a gap in that data, but not unsafe. An example of non-real-time data would be data from a gas gauge sensor in a car. If the data is delayed for several seconds, it is of no matter since the rate of change of the data is quite slow compared to the operating speed of an SoC.

In accordance with some aspects of the invention, scenarios are not defined for the tool, in which case the tool optimizes the NoC synthesis process for physical cost, such as lowest gate cost and/or lowest wire cost.

In accordance with various aspects of the invention, the tool handles the connectivity matrix with the following defined parameter or components:
- one network interface unit per initiator,
- one network interface unit per target,
- one switch is created per defined traffic class, called the main switch of the class,
- one switch after each initiator/initiator NIU that split traffic to the different main switches that this initiator needs to reach,
- one switch before each target/target NIU that merges traffic from the different main switches that are sending traffic to that target

The data width of each switch, and the clock domain it belongs to, is computed using the data width of each attached interface, and their clock domain, as inputs to the tool. In accordance with the various aspects of the invention, each step that transforms the network, which is part of the NoC, also performs the computation of the data width and the clock domain of the newly created network elements.

In accordance with various aspects of the invention, using the tool, each switch for each of the mergers in the main switch is decomposed further into a cascade of mergers, each merger of the cascade being placed on a branching point of the merger roadmap of the attached target. The branching point of the roadmap is defined by the fact that the path is being split into two or more branches. The process of decomposing a splitter in a cascade of splitters preserves the original splitter functionality, as the number of inputs to the cascade is still one, and the number of outputs of the cascade is identical to the number of outputs of the original splitter. The process of decomposing a merger in a cascade of mergers preserves the original merger functionality, as the number of outputs of the cascade is still one, and the number of inputs to the cascade is identical to the number of inputs to the original merger. In accordance with the various aspects of the invention, the effect of the process is to obtain a set of elementary switches, which are represented by the mergers and the splitters, that are physically placed close to where the actual connections between switches need to be.

In accordance with the various aspects of the invention, the tool transforms the network in order to reduce the number of wires used between switches achievable, while keeping the performance as defined in the scenarios, which are a set of required minimum throughput between initiator and target. In accordance with the various aspects of the invention switches are clustered for performance aware switching, mergers and splitters that have been distributed on the roadmaps are treated like ordinary switches.

In accordance with other aspects of the invention, extension of clock and power domains on the floorplan are provided and each element is tested to ensure it is located within the bounds of the specified clock and power domain. If the test fails, the element is moved until a suitable location is found where the test is passing. Once a suitable placement has been found for each element, a routing is done of each connection between elements. The routing process will find a suitable path for the set of wires making the connections between elements. After routing is done, distance-spanning pipeline elements are inserted on the links if required, using the information provided regarding the capabilities of the technology, based on how long it takes for a signal to cover a 1mm distance.

In accordance with some aspects and embodiments of the invention, the tool generates one or more computer files describing the generated NoC that includes:
The list of network elements with their configuration: data width, clock domain.
**The** position of each generated network element on the floor plan.
The set of routes through the network elements implementing the connectivity. In accordance with the aspects of the invention, a route is an ordered list of network elements, one for each pair of (initiator, target) and one for each pair of (target, initiator). The route represents how traffic between the pairs will flow and through which elements.

In accordance with various aspects of the invention, the tool is used to generate metrics about the generated NoC, such as: histograms of wire length distribution, number of switches, histogram of switch by size.

In accordance with another aspect of the invention, the tool automatically inserts in the network various adapters and buffers. The tool inserts the adapters based on the adaptation required between two elements that have different data width, different clock and power domains. The tool inserts the buffers based on the scenarios and the detected rate mismatch.

In accordance with some aspects and embodiments, the tool can be used to ensure multiple iterations of the synthesis are done for incremental optimization of the NoC, which includes a situation when one constraint provided to the tool is information about the previous run.

After execution of the synthesis process by the software, the results are produced in a machine-readable form, such as computer files using a well-defined format to capture information. An example of such a format is XML, another example of such a format is JSON. The scope of the invention is not limited by the specific format.

In an embodiment, a mechanism for accommodating timing realization between a first component and a second component within a NoC, includes, but is not limited to, distance pipe insertion, adding buffer stages, switching buffers to higher drive or faster buffers, adjustments to wire widths, and/or indication to which wire layer(s) are being used.

It is within the scope of this invention for different mechanisms to be physically implemented to overcome timing issues within a synthesized topology, resolving timing issues prior to their occurrence by communicating constraints and/or guidance for the physical implementation. It is within the scope of this invention for physical implementation of a connection to include, but not be limited to, a physical placement of an object, a component and/or a gate around the NoC topology so that a downstream tool does not place a first connection at a great enough distance away from a second connection, so as to exceed a time restraint. It is more desirable to synthesize a network for all of the connections capable of satisfying connectivity requirements and to minimize the number of gates in the synthesized network. It is important to minimize the number of gates in the synthesized network for including, but not limited to, enabling the NoC to fit within the topology parameters; ensuring the timing requirement can be met; building more efficiently in smaller networks; and minimizing the overall power used in the interconnect between signals.

In another embodiment, components of the driving side are replaced with components having greater drive strength to increase speed. For example, when a signal is forwarded from a first switch to a second switch, the timing requirement is exceeded because the distance between the first switch and the second switch is too great, a distance pipe may be placed in between the first switch and the second switch or the drive strength may be increased to make the signal faster by using larger wires having a lower resistance to reduce the parasitic elements on the particular line.

In an embodiment, a floorplan region is a mechanism capable of including, but not limited to; constraining a component, such as a switch and/or a distance pipe stage to a physical location and/or an approximate physical location; and/or dividing a logical interconnect into a plurality of portions that are tuned to the size of the downstream tools for proper synthesis. The physical and logical configuration of the interconnects are configured together to form a logical interconnect. The floorplan regions are used to constrain a component to a particular location. The need for a floorplan region is a response to the increasing size of the network or interconnect of SoCs that are being developed. In other words, the network or interconnect of SoCs have grown larger than downstream implementation tools capacity including, but not limited to, the addition of wider interconnects and/or more components being interconnected.

In accordance with various aspects of the invention, it may be more desirable to have a switch in a particular constrained location, based on the data associated with signals being received and transmitted by the switch, because the performance of the switch may be adversely affected if the switch was moved to a location out of the constrained location.

In accordance with various aspects of the invention, an additional constraint may be utilized to place, for example, gates of a component for a switch or a pipe stage, as close together as possible within each individual component. A current problem in existing placement programs is their tendency to place components too far away from each other. It is within the scope of this invention for a switch being a single component having a plurality of gates, with each gate having a need to be placed. Although the netlist facilitates the interconnection of these components, the downstream tools physically place the components and make the routes to connect the logical connectivity specified.

In accordance with various aspects of the invention, the two separate constraints of the first aspect and the second aspect may be used simultaneously. For example, if a switch that is specified to have a particular performance has the components of that switch distributed over a larger area than specified, the switch will have a lower performance than originally specified. Thus, it would be more desirable to keep components of this switch close together, to each other. Further, based on a larger network, it is more desirable to keep components within a particular region or area of the floorplan free space so that the overall network will perform as specified or analyzed.

In an embodiment, approximations in a given semiconductor process, a maximum length of a single wire is established to ensure that the overall timing of that particular path can be met. Further, it is an important aspect to move from a first component to a second component within a given amount of time. Due to an excessive length between a first component and a second component it may not be achievable to move a signal from the first component to the second component within the given amount of time. As a result, the need for the technical solution of an insertion of distance pipe stages would solve this technical problem, as compared to current techniques.

In accordance with various aspects of the invention, receiving an area-estimation for the first component and the second component, and balancing the timing and other performance requirements in the optimization of the NoC so as to ensure the resulting NoC gates will be placeable, that is, they will fit into the free space in the floorplan allotted to the NoC.

In accordance with various aspects of the invention, further receiving a power requirement for the NoC, and balancing the timing and other performance requirements in the optimization of the NoC so as to ensure the resulting NoC will not exceed the power requirement specified in the constraint.

In accordance with various aspects of the invention, further incorporating physical routing congestion data, either as an estimation based on the NoC netlist structure, or obtained as feedback from the downstream implementation tools, and balancing the timing and other performance requirements in the optimization of the NoC so as to ensure the resulting NoC will be routable in the free space in the floorplan allotted to the NoC.

In accordance with some aspects of the invention, a method is disclosed for guiding physical generation of a NoC. The method includes receiving, at a tool that includes a machine learning model that is trained and receives feedback, at least one constraint parameter for the NoC, the at least one constraint parameter is selected from a group of constraint parameters including at least one physical constraint and at least one performance constraint; augmenting, using the tool, a physical floorplan for the NoC with information that guides a physical implementation of the NoC; and constraining, using the physical floorplan, the physical implementation of a connection to a location on the physical floorplan based on the at least one constraint parameter.

Certain methods according to the various aspects of the invention may be performed by instructions that are stored upon a non-transitory computer readable medium. The non-transitory computer readable medium stores code including instructions that, if executed by one or more processors, would cause a system or computer to perform steps of the method described herein. The non-transitory computer readable medium includes: a rotating magnetic disk, a rotating optical disk, a flash random access memory (RAM) chip, and other mechanically moving or solid-state storage media. Any type of computer-readable medium is appropriate for storing code comprising instructions according to various examples.

Certain examples have been described herein and it will be noted that different combinations of different components from different examples may be possible. Salient features are presented to better explain examples; however, it is clear that certain features may be added, modified and/or omitted without modifying the functional aspects of these examples as described.

Various examples are methods that use the behavior of either or a combination of machines. Method examples are complete wherever in the world most constituent steps occur. For example and in accordance with the various aspects and embodiments of the invention, IP elements or units include: processors (e.g., CPUs or GPUs), RAM - e.g., off-chip dynamic RAM or DRAM, a network interface for wired or wireless connections such as ethernet, Wi-Fi, 3G, 4G long-term evolution (LTE), 5G, and other wireless interface standard radios. The IP may also include various I/O interface devices, as needed for different peripheral devices such as touch screen sensors, geolocation receivers, microphones, speakers, Bluetooth peripherals, and USB devices, such as keyboards and mice, among others. By executing instructions stored in RAM devices processors perform steps of methods as described herein.

Some examples are one or more non-transitory computer readable media arranged to store such instructions for methods described herein. Whatever machine holds non-transitory computer readable media comprising any of the necessary code may implement an example. Some examples may be implemented as: physical devices such as semiconductor chips; hardware description language representations of the logical or functional behavior of such devices; and one or more non-transitory computer readable media arranged to store such hardware description language representations. Descriptions herein reciting principles, aspects, and embodiments encompass both structural and functional equivalents thereof. Elements described herein as coupled have an effectual relationship realizable by a direct connection or indirectly with one or more other intervening elements.

Practitioners skilled in the art will recognize many modifications and variations. The modifications and variations include any relevant combination of the disclosed features. Descriptions herein reciting principles, aspects, and embodiments encompass both structural and functional equivalents thereof. Elements described herein as "coupled" or "communicatively coupled" have an effectual relationship realizable by a direct connection or indirect connection, which uses one or more other intervening elements. Embodiments described herein as "communicating" or "in communication with" another device, module, or elements include any form of communication or link and include an effectual relationship. For example, a communication link may be established using a wired connection, wireless protocols, near-field protocols, or RFID.

To the extent that the terms "including", "includes", "having", "has", "with", or variants thereof are used in either the detailed description and the claims, such terms are intended to be inclusive in a similar manner to the term "comprising."

The scope of the invention, therefore, is not intended to be limited to the exemplary embodiments shown and described herein. Rather, the scope and spirit of present invention is embodied by the appended claims.

## Claims

1. A method for guiding physical generation of a network-on-chip (NoC) using a design tool, the method comprising:
receiving, at the tool, a floorplan for the NoC, wherein the floorplan includes blockage areas and a plurality of constraints for the NoC;
synthesizing the NoC to determine a plurality of routing regions using the tool, wherein the routing regions are defined based on at least one constraint and include at least one node;
identifying a first source in a first routing region of the plurality of routing regions and a first destination in a second routing region of the plurality of routing regions, wherein the first source and the first destination communicate using the NoC;
determining a macro route from the first source to the first destination by computing a minimal route between the first routing region and the second routing region, wherein the macro route includes at least the first routing region and the second routing region; and
establishing a micro route from the first source to the first destination using a minimal path routing algorithm to connect the first source to the first destination.

2. The method of claim 1, wherein the macro route is determined using a Dijkstra algorithm.

3. The method of claim 2, wherein determining the macro route includes finding a shortest path between each region that is traversed by the macro routing at a scale of routing regions.

4. The method of claim 1, wherein the macro route is determined using an A* algorithm.

5. The method of claim 4, wherein determining the macro route includes finding a shortest path between at least two regions at a scale of routing regions.

6. The method of claim 1, wherein the micro route originates in the first routing region and ends in the second routing region.

7. The method of claim 6, wherein the micro routing traverses at least one other routing region selected from the plurality of routing regions.

8. The method of claim 7, wherein establishing the micro route uses routing along X and routing along Y through the first routing region.

9. The method of claim 8, wherein establishing the micro route uses routing along X and routing along Y through the second routing region.

10. The method of claim 1 further comprising receiving, at the tool, at least one blockage area in the floorplan.

11. A design tool for editing a network-on-chip (NoC) topology on top of a floorplan in a graphical view, the tool comprising:
a generation module that identifies a required route between two network elements while avoiding blocked regions;
a computation module that performs distance computations to generate optimal trees; and
a discretized module that splits the floorplan is into cells,
wherein the computation module computes a route between two cells in the floorplan that satisfies the required route using a macro routing scheme and a micro routing scheme.

12. The design tool of claim 11, wherein the cells are defined by a plurality of routing regions, wherein each of the plurality of routing regions includes at least one constraint parameter and include at least one node.

13. The design tool of claim 12, wherein the design tool determines a macro route from a first source to a first destination by computing a minimal route between a first routing region of the plurality of routing regions and a second routing region of the plurality of routing regions.

14. The design tool of claim 13, wherein the design tool identifies a micro route from the first source to the first destination using a minimal path routing algorithm to connect the first source to the first destination.
